(19) **Europäisches Patentamt**
**European Patent Office**
**Office européen des brevets**

(11) **EP 2 477 416 A2**

(12) **EUROPÄISCHE PATENTANMELDUNG**

(43) Veröffentlichungstag:
**18.07.2012 Patentblatt 2012/29**

(51) Int Cl.:
***H04Q 9/00*** *(2006.01)*

(21) Anmeldenummer: **11009649.2**

(22) Anmeldetag: **07.12.2011**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **12.01.2011 DE 102011008398**

(71) Anmelder: **Prof. Dr. Horst Ziegler und Partner GbR
70499 Stuttgart (DE)**

(72) Erfinder: **Ziegler,Horst, Prof. Dr.
33100 Paderborn (DE)**

(74) Vertreter: **Röthinger, Rainer
Wuesthoff & Wuesthoff
Patent- und Rechtsanwälte
Schweigerstrasse 2
81541 München (DE)**

(54) **Energiesparende Datenübertragungstechnik**

(57) Ein Verfahren zum Funkempfang von einer Vielzahl Datenerfassungseinheiten an eine Empfangsvorrichtung gesendeter Datentelegramme im Rahmen einer Datenkommunikation mit Empfangszeitvorhersage wird bereitgestellt. Die Empfangsvorrichtung umfasst zwei oder mehr Empfangsantennen und speichert, in Zuordnung zu jeder Datenerfassungseinheit der Vielzahl Datenerfassungseinheiten, einerseits eine vorhergesagte nächste Empfangszeit und andererseits eine Präferenzempfangsantenne von den zwei oder mehr Empfangsantennen. Zur gespeicherten Empfangszeit wird die gespeicherte Präferenzempfangsantenne zum Empfang eines Datentelegramms aktiviert. Falls kein fehlerfreies Datentelegramm empfangen wurde, wird die gespeicherte Präferenzempfangsantenne gewechselt. So ist ein zuverlässiger Empfang aller Datenerfassungseinheiten durch eine Empfangsvorrichtung bei wesentlich reduziertem Strombedarf erreichbar.

Fig. 3

EP 2 477 416 A2

**Beschreibung**

**Gebiet der Erfindung**

Die vorliegende Erfindung betrifft eine Technik zum energieeffizienten Übertragen von Daten. Insbesondere betrifft die Erfindung eine Vorrichtung und ein Verfahren zum stromsparenden Abgleich von Daten, wie etwa Zählerstände oder Messwerte, mittels kurzer Funktelegramme.

**Technischer Hintergrund der Erfindung**

Eine zuverlässige Erfassung lokal (und autonom) bestimmter Messwerte ist von großer wirtschaftlicher und praktischer Bedeutung. So sind mittels verteilter Temperatursensoren beispielsweise in einem Gewächshaus von der Jahreszeit nahezu unabhängige Erträge hoher Qualität erreichbar. Auch kann ein zuverlässiger Betrieb von Industrieanlagen und Server-Räumen gewährleistet werden durch verteilte Sensoren zur Erfassung von Luftströmungsgeschwindigkeit, Raumtemperatur oder elektrischer Leistungsaufnahme.

Bedeutende Anwendungsbereiche sind auch Wohn- und Büroräume. Hier ist es wünschenswert Zählerstände von Verbrauchszählern durch Kommunikationssysteme zu erfassen. Hierzu sind Funkkommunikationssysteme aus der Offenlegungsschrift DE 10 2005 036 250 A1 bekannt, die eine Fernablesung der Verbrauchszähler ermöglicht. Eine Bewohner oder Mitarbeiter störende Begehung (der Wohn- bzw. Büroräume) zur manuellen Auslesung einer Vielzahl verteilter Verbrauchszähler sowie mehrfache Anfahrten von Ablesepersonal nach individuellen Terminvereinbarungen können so entfallen.

In einem konventionellen Funkkommunikationssystem senden verschiedene batteriebetriebene Verbrauchszähler ihre Zählerstände an einen oder wenige Empfänger, welche die Zählerstände für eine zentrale Ablesung sammeln. Herkömmlicherweise werden als Empfänger netzbetriebene stationäre Empfänger oder wiederaufladbare mobile Empfänger verwendet, die nach einem oder wenigen Einsätzen von ein paar Stunden oder wenigen Tagen wieder aufgeladen werden müssen.

Während es der Netzbetrieb stationärer Empfänger oder der kurzzeitige Batteriebetrieb mobiler Empfänger erlauben, ständig auf Empfang zu sein, muss für den mehrjährigen Batteriebetrieb eines stationären Empfängers ein stromsparenderes Funkkommunikationssystem verwendet werden. So senden herkömmliche Verbrauchszähler ihre Zählerstände zu vorbestimmten Sendezeitpunkten und der Empfänger wird nur während diesen Empfangszeitpunkten bestromt. Verfahren zur empfängerseitigen Vorhersage der Empfangszeitpunkte sind in der Offenlegungsschrift DE 102 38 692 A1 beschrieben. Entsprechend einer Stromersparnis seitens der ebenfalls batteriebetriebenen Verbrauchszähler liegen zwischen aufeinanderfolgenden Sendezeitpunkten oftmals mehrere Stunden, so dass eine Ablesung mittels eines mobilen Empfängers einen längeren Aufenthalt vor Ort erfordern kann. Trotz Empfangszeitvorhersage und Einhaltung eines der Sendeleistung des Verbrauchszählers entsprechenden Maximalabstands zum Empfänger werden, gerade auch bei stationären Empfängern, die Zählerstände einzelner Verbrauchszähler über lange Zeit oder sogar dauerhaft nicht empfangen.

Es ist Aufgabe der vorliegenden Erfindung, eine Funkkommunikationstechnik bereitzustellen, die einen mehrjährigen Batteriebetrieb eines Empfängers ermöglicht, um Daten von allen dem Empfänger (räumlich und/oder logisch) zugeordneten Einheiten zu empfangen.

**Abriss der Erfindung**

Die Aufgabe wird durch ein Verfahren zum Funkempfang von einer Vielzahl Datenerfassungseinheiten zu einer Empfangsvorrichtung gesendeter Datentelegramme einer Datenkommunikation mit Empfangszeitvorhersage gelöst. Die Empfangsvorrichtung weist zwei oder mehr Empfangsantennen auf und das Verfahren umfasst ein Speichern einer Präferenzempfangsantenne, ein Aktivieren der gespeicherten Präferenzempfangsantenne und ein Wechseln der gespeicherten Präferenzempfangsantenne. In Zuordnung zu jeder Datenerfassungseinheit der Vielzahl Datenanpassungseinheiten wird beim Speichern sowohl eine vorhergesagte nächste Empfangszeit als auch eine Präferenzempfangsantenne der (zwei oder mehr) Empfangsantennen gespeichert. Zur gespeicherten Empfangszeit wird die gespeicherte Präferenzempfangsantenne zum Empfang eines Datentelegramms aktiviert. Falls kein fehlerfreies Datentelegramm empfangen wurde, wird die gespeicherte Präferenzempfangsantenne gewechselt.

Eine maximale Übertragungsdistanz (zwischen Datenerfassungseinheit und Empfangsvorrichtung) kann grundsätzlich von elementaren funktechnische Parameter wie einer Sendeleistung (der Datenerfassungseinheiten), einer Empfangsempfindlichkeit (der Empfangsvorrichtung), einer Funkfrequenz (der Datenkommunikation) abhängen. Die Erfindung kann (ferner) berücksichtigen, dass die maximale Übertragungsdistanz erheblich durch Funkinterferenzen und störende Ausbreitungshindernisse (insbesondere Wände) innerhalb einer Kommunikationsumgebung, beispielsweise einer Liegenschaft, beeinflussbar ist. Durch verschiedene Ausbreitungswege desselben Datentelegramms, beispielsweise aufgrund von Mehrfachreflexionen elektromagnetischer Strahlung (der Datentelegramme) an Raumwänden und an Gegenständen, können Interferenzauslöschungspunkte entstehen. Im Raum sind solche Interferenzauslöschungspunkte oft nur wenige Zentimeter voneinander entfernt. Durch die zwei oder mehr Empfangsantennen können, selbst wenn eine oder alle bis auf eine Empfangsantenne (im Wesentlichen) mit einem Interferenzauslöschungspunkt zusammen fallen sollte, noch immer zuverlässig Datentelegramme von jeder der Vielzahl Datenerfassungseinheiten empfangen werden. Damit kann eine zur Abdeckung einer Gesamtzahl an Datenerfassungseinheiten (in der Liegenschaft) notwendige Anzahl an Empfangsvorrichtungen (ggf. auf eine einzige Empfangsvorrichtung) reduziert werden.

Eine durch Funkinterferenzen geprägte Verteilung (der Leistungsdichte oder der Intensität) der elektromagnetischen Strahlung kann im Allgemeinen (entsprechend der unterschiedlichen Aussendungsorte) für jede der Vielzahl Datenerfassungseinheiten verschieden sein. So ist es möglich, dass bei einer Mehrzahl der Datenerfassungseinheiten keine der zwei oder mehr Empfangsantennen von einem Interferenzauslöschungspunkt betroffen ist. Bei einzelnen oder wenigen Datenerfassungseinheiten kann eine der Empfangsantennen von einem Interferenzauslöschungspunkt betroffen sein. Die betroffene Empfangsantenne kann im Allgemeinen entsprechend der Verteilung der elektromagnetischen Strahlung bei verschiedenen Datenerfassungseinheiten verschieden sein. Indem in Zuordnung zu jeder der Datenerfassungseinheiten der Vielzahl Datenerfassungseinheiten sowohl die vorhergesagte nächste Empfangszeit als auch die (nicht betroffene) Präferenzempfangsantenne unter den Empfangsantennen gespeichert wird, kann zur gespeicherten Empfangszeit die entsprechende gespeicherte Präferenzempfangsantenne zum (höchstwahrscheinlich fehlerfreien) Empfang eines Datentelegramms (von der zugeordneten Datenerfassungseinheit) aktiviert werden. So können, ausgehend von einem erfolgreichen Empfang eines (früheren) Datentelegramms der entsprechenden Datenerfassungseinheit, auch weiterhin zuverlässig (zukünftige) Datentelegramme von der entsprechenden Datenerfassungseinheit empfangen werden. Falls dagegen (zur vorhergesagten Empfangszeit) kein fehlerfreies Datentelegramm empfangen wurde, kann zu einer anderen Empfangsantenne (unter den zwei oder mehr Empfangsantennen) als (von nun an) gespeicherte Präferenzempfangsantenne gewechselt werden. So kann auch bei einer zeitlich veränderlichen Umgebung (d.h. zeitabhängigen Randbedingungen der elektromagnetischen Ausbreitung) ein dauerhafter (d.h. über mehrere Empfangszeiten zumeist fehlerfreier) Empfang von Datentelegrammen jeder der Vielzahl Datenerfassungseinheiten sicherstellbar sein.

Die "Vielzahl Datenerfassungseinheiten" kann solche Datenerfassungseinheiten umfassen, die bezüglich elementarer funktechnischer Parameter und kompatibler Protokolle zur Datenkommunikation (insbesondere zur Empfangszeitvorhersage) mit der Empfangszeitvorrichtung ausgebildet sind. Alternativ oder ergänzend kann die Vielzahl Datenerfassungseinheiten an der Empfangsvorrichtung voreingestellt sein. Jede Datenerfassungseinheit der Vielzahl Datenerfassungseinheiten kann eine diese individualisierende (auch als "ID" bezeichnete) Kennung zusammen mit dem Datentelegramm (in einem Datenkopf des Datentelegramms) senden. Die Zuordnung zu jeder Datenerfassungseinheit kann auf Grundlage der Kennung erfolgen.

Die Empfangsvorrichtung und/oder die Vielzahl Datenerfassungseinheiten kann stationär sein. Das Vorstehende zur maximale Übertragungsdistanz kann insbesondere bei stationärer Empfangsvorrichtung und stationären Datenerfassungseinheiten zutreffen. "Stationär" kann die Vielzahl Datenerfassungseinheiten bzw. die Empfangsvorrichtung sein, wenn diese für eine mehrere Empfangszeiten (d.h. für eine mehrere Aussendungen von Datentelegrammen derselben Datenerfassungseinheit) umfassende Zeitspanne (relativ zueinander und/oder gegenüber einer Umgebung) unbewegt sind.

Techniken zur (auch als Empfangszeitpunktsprädikation bezeichneten) Empfangszeitvorhersage, insbesondere seitens der Empfangsvorrichtung, sind in der Offenlegungsschrift DE 102 38 692 A1, der Offenlegungsschrift DE 199 05 316 A1, und der Offenlegungsschrift DE 10 2005 036 250 A1 beschrieben, auf die hier ausdrücklich Bezug genommen wird. Dem Speichern der Empfangszeit kann ein Bestimmen der vorhergesagten nächsten Empfangszeit (auf Grundlage der letzten Sendezeiten empfangener und die Kennung aufweisender Datentelegrammen) vorausgehen.

Die Datenkommunikation (zwischen einerseits den Datenerfassungseinheiten und andererseits der Empfangsvorrichtung) kann unidirektional sein. Die Datenkommunikation kann auf eine Kommunikationsrichtung von den Datenerfassungseinheiten zur Empfangsvorrichtung beschränkt sein. So können kostengünstige Datenerfassungseinheiten (ohne Empfangseinheit) und eine kostengünstige Empfangsvorrichtung (ohne Sendeeinheit) verwendet werden. Zudem kann durch die unidirektionale Datenkommunikation ein Übertragungsprotokoll vereinfacht, Übertragungszeiten (des Datentelegramms) verkürzt und/oder ein Stromverbrauch (sowohl seitens der Datenerfassungseinheiten als auch seitens der Empfangsvorrichtung) verringert werden.

Die Empfangsvorrichtung kann einen Empfänger, vorzugsweise einen Überlagerungsempfänger, aufweisen. Beim Aktivieren der gespeicherten Präferenzempfangsantenne kann der Empfänger (ausschließlich) mit der gespeicherten Präferenzempfangsantenne gekoppelt (vorzugsweise galvanisch verbunden) werden. So ist eine kostengünstige Empfangsvorrichtung mit nur einem (Überlagerungs-)Empfänger verwendbar.

Die Empfangsvorrichtung kann (an zum Funkempfang der Vielzahl Datenerfassungseinheiten ausgebildeten Empfängern) ausschließlich einen einzigen Überlagerungsempfänger aufweisen. Alternativ kann die Empfangsvorrichtung einen Überlagerungsempfänger in Zuordnung zu jeder Empfangsantenne aufweisen. Jeder der Überlagerungsempfänger kann mit der zugeordneten Empfangsantenne permanent (eingangsseitig) gekoppelt (vorzugsweise galvanisch verbunden) sein. So kann eine zusätzliche Dämpfung durch Mittel zur wechselnden Zuordnung der Empfangsantennen vermieden werden.

Die "Empfangszeit" kann ein (durch eine Anfangszeit und eine Endzeit bestimmtes) Empfangszeitfenster sein. Der Überlagerungsempfänger kann durch einen Strompuls betrieben werden. Eine (rechteckige) Pulsform des Strompulses kann im Wesentlichen die Empfangszeit umfassen. Eine Pulsdauer des Strompulses kann gleich einer Zeitspanne (zwischen der Anfangszeit und der Endzeit) des Empfangszeitfenster sein. Im Fall mehrerer Überlagerungsempfänger jeweils in Zuordnung zu je einer Empfangsantenne kann beim Aktivieren der gespeicherten Präferenzempfangsantenne der Überlagerungsempfänger in Zuordnung zur gespeicherten Präferenzempfangsantenne durch den Strompuls betrieben werden. So kann eine Empfangsvorrichtung besonders stromsparend betrieben werden.

Die Empfangsvorrichtung kann netzunabhängig betrieben werden. Vorzugsweise ist eine Stromquelle (und deren Ladungskapazität) für eine Standzeit von mehr als fünf Jahren ausgebildet. Die Empfangsvorrichtung kann batteriebetrieben, solarbetrieben, oder thermoelektrisch betrieben werden. Der Begriff "Batteriebetrieb" schließt einen wiederaufladbaren Akkumulatorbetrieb ein. Auch kann die Empfangsvorrichtung zum kombinierten Betrieb (der vorgenannten Betriebsarten) ausgebildet sein. So kann eine einen momentanen Leistungsbedarf der Empfangsvorrichtung übersteigende Leistung (einer Solarleistungsversorgung oder einer thermoelektrischen Leistungsversorgung) in einem Akkumulator zwischengespeichert werden. Ein thermoelektrischer Betrieb kann eine Temperaturdifferenz zwischen einer Rückseite und Vorderseite zur Stromerzeugung nutzen. So sind auch (durch die Leistungsversorgung) nahezu unbegrenzte Standzeiten erreichbar.

Beim Wechseln der gespeicherten Präferenzempfangsantenne kann (unter den zwei oder mehr Empfangsantennen) umlaufend oder zufällig (zu einer nächsten Empfangsantenne) gewechselt werden. Beim Wechseln kann eine Rangfolge der Empfangsantennen berücksichtigt werden. Die Rangfolge der Empfangsantennen kann in der Empfangsvorrichtung voreingestellt sein. Alternativ kann die Rangfolge der Empfangsantenne durch die Anzahl Datenerfassungseinheiten, welche die Empfangsantenne als Präferenzempfangsantenne gespeichert haben, bestimmt sein. So kann im Fall einer veränderten Empfangssituation (auch bei unidirektionaler Datenkommunikation) in möglichst kurzer Zeit eine neue Präferenzempfangsantenne zum (wieder fehlerfreien) Empfangen eines Datentelegramms gespeichert werden.

Die gespeicherte Präferenzempfangsantenne kann gewechselt werden, falls mehrfach, vorzugsweise dreifach, kein fehlerfreies Datentelegramm empfangen wurde. "Kein fehlerfreies Datentelegramm" (zur Empfangszeit oder innerhalb des Empfangszeitfensters) schließt den Fall ein, dass

- (überhaupt) kein Datentelegramm empfangen wurde (insbesondere das Ausbleiben eines dem Datentelegramm zuordbaren Empfangssignals),

- das Datentelegramm nur unvollständig empfangen wurde,

- eine Redundanzprüfung des (vollständig) empfangenen Datentelegramms eine fehlerhafte Übertragung des Datentelegramms ergibt, oder

- Nutzdaten des Datentelegramms eine Formatbedingung nicht erfüllen.

Zur Redundanzprüfung kann eine (auch als "cyclic redundancy check" oder CRC bezeichnete) zyklische Redundanzprüfung eingesetzt werden. Alternativ oder ergänzend kann eine kryptographische Hash-Funktion eingesetzt werden. Die Formatbedingung kann Größenschranken an einen oder mehrere Datenwerte des Datentelegramms umfassen. Beispielsweise können Temperaturen unter 0° als fehlerhaft gelten. So kann (neben der Notwendigkeit zum Wechseln der Präferenzempfangsantenne) eine (unbeabsichtigt) fehlerhafte Datenkommunikation oder auch eine (etwa benutzerseitig gezielt) manipulierte Datenkommunikation erkannt (und von einer weiteren Datenverarbeitung ausgeschlossen) werden.

Die Zeitspanne des Empfangszeitfensters kann im Bereich von 50 ms bis 5 s sein. Die Zeitspanne kann einer Unsicherheit der Empfangszeitvorhersage entsprechen. Im Rahmen der Empfangszeitvorhersage berechenbare Empfangszeiten können für jede der Datenerfassungseinheiten (d.h. jeweils für jede Datenerfassungseinheit für sich betrachtet) regelmäßig oder unregelmäßig (aber immer berechenbar) sein. "Unregelmäßig" umfasst hier sämtliche zeitlich unterschiedlichen Intervalle der Empfangszeiten (im Vergleich der verschiedener Datenerfassungseinheit untereinander, oder jeweils für jede Datenerfassungseinheit für sich betrachtet). Die Intervalle können für jede der Datenerfassungseinheiten zeitlich konstant sein und unter jeweils verschiedenen Datenerfassungseinheiten unterschiedlich sein. Alternativ oder zusätzlich können die Intervalle für eine oder jede Datenerfassungseinheit jeweils zeitlich variieren (d.h. die Empfangszeiten der einzelnen Datenerfassungseinheit sind aperiodisch). Die Variation kann ein sägezahnartiger Zuwachs des Intervalls sein. Die Variation kann auch eine pseudo-zufällige Verteilung in einem Zeitvariationsbereich sein. Die Folge der veränderlichen Intervalle kann spezifisch für jede Datenerfassungseinheit sein. Alternativ kann die Folge der veränderlichen Intervalle einheitlich und zueinander zeitversetzt sein. So können Mehrfachkollisionen zwischen den Datentelegrammen verschiedener Datenerfassungseinheiten verhindert werden.

Die Datenerfassungseinheiten können räumlich getrennt angeordnet sein. So ist durch die Empfangsvorrichtung eine zentrale Erfassung (und Speicherung) der von den verteilten Datenerfassungseinheiten erhobenen Daten erreichbar. Die Empfangsvorrichtung kann ferner zur Anzeige und/oder Funkübertragung der zentral erfassten Daten ausgebildet sein. Die Funkübertragung kann eine Übertragung über ein Mobilfunknetz umfassen. So kann auf eine Begehung oder manuelle Ablesung vollständig verzichtet werden.

Die Datenerfassungseinheit kann einen Verbrauchszähler und/oder wenigstens einen Sensor umfassen. Die Datentelegramme können einen Zählerstand (des Verbrauchszählers) bzw. einen Messwert (des Sensors) repräsentieren. Der Sensor kann ein Temperaturfühler sein, und der Messwert kann eine Ist-Temperatur einer Raumklimatisierung repräsentieren. Der Sensor kann auch ein Bewegungsmelder sein, und der Messwert kann ein Notrufkriterium zur Mobilitätsüberwachung (eines Kinds oder einer gebrechlichen Person) sein.

Die Datentelegramme können eine Sendedauer im Bereich von 5 ms bis 500 ms aufweisen. So ist eine ausreichend hohe Datenübertragung bei geringem Stromverbrauch erreichbar. Vorzugsweise ist die Zeitspanne des Empfangszeitfensters mindestens das Dreifache der (längsten) Sendedauer.

Die Wahrscheinlichkeit für eine Auslöschung des Datentelegramms an allen (der zwei oder mehr) Empfangsantennen kann mit einer Anzahl der Empfangsantennen exponentiell abnehmen. Für eine Wahrscheinlichkeit $P_{Auslöschung}$ (mit $P_{Auslöschung} < 1$) dafür, dass eine einzelne (oder eine bestimmte) Empfangsantenne von einer Auslöschung betroffen ist, kann eine Empfangswahrscheinlichkeit $P_{Empfang}$ bei N Empfangsantennen näherungsweise gleich

$$P_{Empfang} = 1 - (P_{Auslöschung})^N$$

sein. Eine Gesamtempfangswahrscheinlichkeit $P_{Gesamtempfang}$ dafür, dass die Vielzahl von M Datenerfassungseinheiten empfangen wird, kann näherungsweise gleich

$$P_{Gesamtempfang} = (1 - (P_{Auslöschung})^N)^M$$

oder

$$P_{Gesamtempfang} = 1 - M \cdot (P_{Auslöschung})^N$$

sein. Die Anzahl der Empfangsantennen, N, kann so gewählt werden, dass eine vorgegebene Empfangswahrscheinlichkeit erreicht wird. Die Anzahl der Empfangsantennen, N, kann auch in Abhängigkeit von der Vielzahl an Datenerfassungseinheiten, M, gewählt werden. Insbesondere kann die Anzahl der Empfangsantennen, N, so gewählt werden, dass eine vorgegebene Gesamtempfangswahrscheinlichkeit erreicht wird.

Die zwei oder mehr Empfangsantennen können zueinander im Wesentlichen parallel angeordnet sein. So kann durch einen Abstand zwischen den parallelen Empfangsantennen die Wahrscheinlichkeit einer Interferenzauslöschung des Datentelegramms (an jeder der Empfangsantennen) wesentlich verringert werden.

Die zwei oder mehr Empfangsantennen können zueinander im Wesentlichen senkrecht angeordnet sein. So kann eine Polarisation des Datentelegramms berücksichtigt werden. Die Polarisation kann durch Reflexionen verändert werden und die gespeicherte Präferenzempfangsantenne kann entsprechend der Polarisation beim Funkempfang an der Empfangsvorrichtung gespeichert werden. Ferner kann die Polarisation des Datentelegramms verschiedener Datenerfassungseinheiten unterschiedlich sein. Letzteres kann zur verbesserten Kennung der Datentelegramme verschiedener Datenerfassungseinheiten dienen.

Mehr als zwei Empfangsantennen können entsprechend einem ein-, zwei- oder dreidimensionalen Gitter angeordnet sein. Indem eine bestimmte Teilmenge der im Gitter angeordneten Empfangsantennen als (zusammengeschaltete) Präferenzempfangsantennen (in Zuordnung zu einer oder jeder Datenerfassungseinheit) gespeichert werden (und dementsprechend zur Empfangszeit aktiviert werden), wird ein Empfang mit einer (für jede Datenerfassungseinheit individuell bestimmbaren) gerichteten Empfangscharakteristik ermöglicht. Für eine besonders kompakte Bauweise können drei Empfangsantennen im Wesentlichen entsprechend einem gleichseitigen Dreieck (ohne dass sich die Antennen berühren) angeordnet sein. So ist eine hohe Empfangsempfindlichkeit bei einer (auf jede Datenerfassungseinheit individuell) abgestimmten Empfangscharakteristik erreichbar.

Die Datentelegramme können mit einer Wellenlänge, $\lambda$, empfangen werden. Bei einer Trägerfrequenz, f, von etwa 868 MHz beträgt die Wellenlänge, $\lambda$, (in Luft) etwa 35 cm. Eine oder alle der (zwei oder mehr) Empfangsantennen können einen Nächster-Nachbar-Abstand im Bereich von $\lambda/8$ bis $\lambda$, vorzugsweise von $\lambda/4$, aufweisen. Bei einem solchen Nächster-Nachbar-Abstand kann sichergestellt werden, dass nicht bei allen Empfangsantennen eine Interferenzauslöschung des Datentelegramms mit Wellenlänge $\lambda$ vorliegt. Insbesondere können drei (stabförmige) Empfangsantennen derart zueinander parallel angeordnet sein, dass jede Empfangsantenne mit jeder der beiden anderen einen Abstand von (im Wesentlichen) $\lambda/4$ aufweist (d.h. eine Antennenanordnung auf den Längskanten eines Prismas, dessen Leitpolygon ein gleichseitiges Dreieck ist). So kann eine Interferenzauslöschung auch beim Funkempfang der Datentelegramme aus verschiedenen Raumrichtungen erreicht werden.

Das Verfahren kann iteriert werden. Das Speichern (der Präferenzempfangsantenne) kann Teil eines vorhergehenden Schritts des Wechselns (der gespeicherten Präferenzempfangsantenne) sein. So kann das Verfahren iterativ auf zeitliche Veränderungen einer Empfangssituation (oder der Umgebung) reagieren. Alternativ oder zusätzlich kann das Speichern (der Präferenzempfangsantenne) Teil einer Initialisierung sein.

So kann das Verfahren mit einer optimalen Anfangskonfiguration implementiert werden.

Die Initialisierung kann bei einer erstmaligen Inbetriebnahme der Empfangsvorrichtung oder nach einer Installation wenigstens einer (weiteren) der Datenerfassungseinheiten erfolgen. Die Initialisierung kann für jede Empfangsantenne jeweils einen (auch als Daueraktivierung bezeichneten) Dauerbetrieb des Überlagerungsempfängers umfassen. Beim Dauerbetrieb (für jede Empfangsantenne) kann die jeweilige Empfangsantenne zum Empfangen von Datentelegrammen aktiviert sein. Der Dauerbetrieb (für jede Empfangsantenne) kann einen durch die Empfangszeitvorhersage bestimmten maximale Sendezeitabstand (der Datentelegramme derselben Datenerfassungseinheit) umfassen. Falls die Empfangszeitvorhersage die Kenntnis mehrerer Sendezeitpunkte voraussetzt, kann der Dauerbetrieb, für jede Empfangsantenne, auch ein entsprechendes Mehrfaches des maximalen Sendezeitabstands umfassen. Der maximale Sendezeitabstand (der Datentelegramme derselben Datenerfassungseinheit) kann einer zeitlichen Obergrenze für zwei aufeinanderfolgende Datentelegramme einer der Datenerfassungseinheiten entsprechen. Soweit der maximale Sendezeitabstand für verschiedene Datenerfassungseinheiten unterschiedlich ist, kann der größte maximale Sendezeitabstand unter der Vielzahl Datenerfassungseinheiten maßgeblich sein. Die Empfangszeitvorhersage kann eine standardisierte Empfangszeitvorgabe sein. Der maximale Sendezeitabstand kann einer maximalen Sendepause gemäß der standardisierten Empfangszeitvorhersage entsprechen. Zur Initialisierung können die Empfangsantennen sequentiell (d.h. nacheinander oder unmittelbar aufeinanderfolgend) für jeweils den maximalen Sendezeitabstand aktiviert sein. Falls ein fehlerfreies Datentelegramm empfangen wird, kann die jeweilige (d.h. beim fehlerfreien Empfang aktive) Empfangsantenne als Präferenzempfangsantenne gespeichert werden. Dadurch kann bei einer Installation ein fehlerfreier Empfang der Datentelegramme aller Datenerfassungseinheiten überprüft und als Anfangskonfiguration gespeichert werden. Insbesondere kann die Empfangsvorrichtung dazu ausgebildet sein, eine Liste der Datenerfassungseinheiten mit fehlerfreiem Datentelegrammempfang (anhand der Kennung der Datenerfassungseinheiten) auszugeben.

Ferner kann (insbesondere bei der Initialisierung) eine Empfangsfeldstärke (des fehlerfrei empfangenem Datentelegramms) für die jeweilige Empfangsantenne erfasst werden. Die Empfangsantenne mit der höchsten Empfangsfeldstärke (bezogen auf dieselbe Datenerfassungseinheit) kann in Zuordnung zur jeweiligen (empfangenen) Datenerfassungseinheit als Präferenzempfangsantenne gespeichert werden. So kann eine optimale Anfangskonfiguration der gespeicherten Präferenzempfangsantennen von der Empfangsvorrichtung automatisch erstellt werden. Die Empfangsvorrichtung kann ferner dazu ausgebildet sein, im Fall eines Datenverlusts hinsichtlich der gespeicherten Präferenzempfangsantennen die Initialisierung durchzuführen.

Aufeinanderfolgende Datentelegramme einer der Datenerfassungseinheiten können geringfügig, vorzugsweise um höchstens 5 %, geänderte Werte repräsentieren. Insbesondere kann die selbe Datenerfassungseinheit identische Datentelegramme mehrfach senden. So kann (insbesondere bei einer stromsparenden gepulsten und unidirektionalen Datenkommunikation) ein bestimmter Zählerstand oder Messwert zu einem vorgegebenen Zeitpunkt (insbesondere Stichtag) interpoliert werden. Insbesondere kann ein Verlust einzelner Datentelegramme (aufgrund zeitgleicher Aussendung der Datentelegramme oder anlässlich eines Wechsels der gespeicherten Präferenzempfangsantenne) für die zuverlässige Erfassung aller Datenerfassungseinheiten unschädlich sein.

Die Aufgabe ist ferner durch eine Empfangsvorrichtung zum Funkempfang von einer Vielzahl Datenerfassungseinheiten an die Empfangsvorrichtung gesendeter Datentelegramme einer Datenkommunikation mit Empfangszeitvorhersage gelöst. Die Empfangsvorrichtung umfassend zwei oder mehr Empfangsantennen, einen Speicher, und eine Steuereinheit. Der Speicher ist dazu ausgebildet, in Zuordnung zu jeder Datenerfassungseinheit der Vielzahl Datenerfassungseinheiten, sowohl eine vorhergesagte nächste Empfangszeit als auch eine Präferenzempfangsantenne von den zwei oder mehr Empfangsantennen zu speichern. Die Steuereinheit ist dazu ausgebildet, zur gespeicherten Empfangszeit die gespeicherte Präferenzempfangsantenne zum Empfang eines Datentelegramms zu aktivieren. Ferner ist die Steuereinheit dazu ausgebildet, die gespeicherte Präferenzempfangsantenne zu wechseln, falls kein fehlerfreies Datentelegramm empfangen wurde. Die Steuereinheit kann ein Prozessor sein.

Die zwei oder mehr Empfangsantennen können in einem Gehäuse (der Empfangsvorrichtung) untergebracht sein. Vorzugsweise sind die Empfangsantennen an einer Gehäuseseite oder an einer umlaufenden Gehäusewand für eine kompakte Bauweise angeordnet.

Die vorgenannten Verfahrensmerkmale können vorteilhaft durch eine entsprechende Ausbildung der Empfangsvorrichtung verwirklicht sein. Auch können die vorgenannten Vorrichtungsmerkmale vorteilhaft zur Ausführung des Verfahren verwendet werden. Weitere Vorteile und Merkmale der Erfindung (die mit jedem der vorgenannten Merkmale kombinierbar sind) ergeben sich aus der nachfolgenden Beschreibung einzelner Ausführungsbeispiele unter Verweis auf die beigefügten Zeichnungen. Es zeigen:

Fig. 1    eine Anordnung einer Vielzahl Datenerfassungseinheiten in räumlicher Zuordnung zu einer Empfangsvorrichtung,

Fig. 2    eine detailliertere Anordnung der Vielzahl Datenerfassungseinheiten und der Empfangsvorrichtung aus Fig. 1,

Fig. 3    einen schematischen Aufbau eines ersten Ausführungsbeispiels der Empfangsvorrichtung mit zwei parallelen Empfangsantennen,

Fig. 4    einen schematischen Abschnitt eines zweiten Ausführungsbeispiels der Empfangsvorrichtung mit zwei senkrechten Empfangsantennen,

Fig. 5    einen schematischen Abschnitt eines dritten Ausführungsbeispiels der Empfangsvorrichtung mit drei parallelen Empfangsantennen,

Fig. 6    einen schematischen Abschnitt eines vierten Ausführungsbeispiels der Empfangsvorrichtung mit drei paarweise zueinander senkrecht stehenden Empfangsantennen,

Fig. 7    einen schematischen Abschnitt eines fünften Ausführungsbeispiels der Empfangsvorrichtung mit an gegenüberliegenden Gehäuseseiten angeordneten Empfangsantennen,

Fig. 8    einen schematischen Abschnitt eines sechsten Ausführungsbeispiels der Empfangsvorrichtung mit an einer Gehäusewand umlaufenden Empfangsantenne,

Fig. 9    eine tabellarische Darstellung eines Speicherinhalt der Empfangsvorrichtung,

Fig. 10    eine logische Verknüpfung des Speicherinhalts der Fig. 9, und

Fig. 11    ein Verfahren zum Funkempfang mittels der Empfangsvorrichtung.

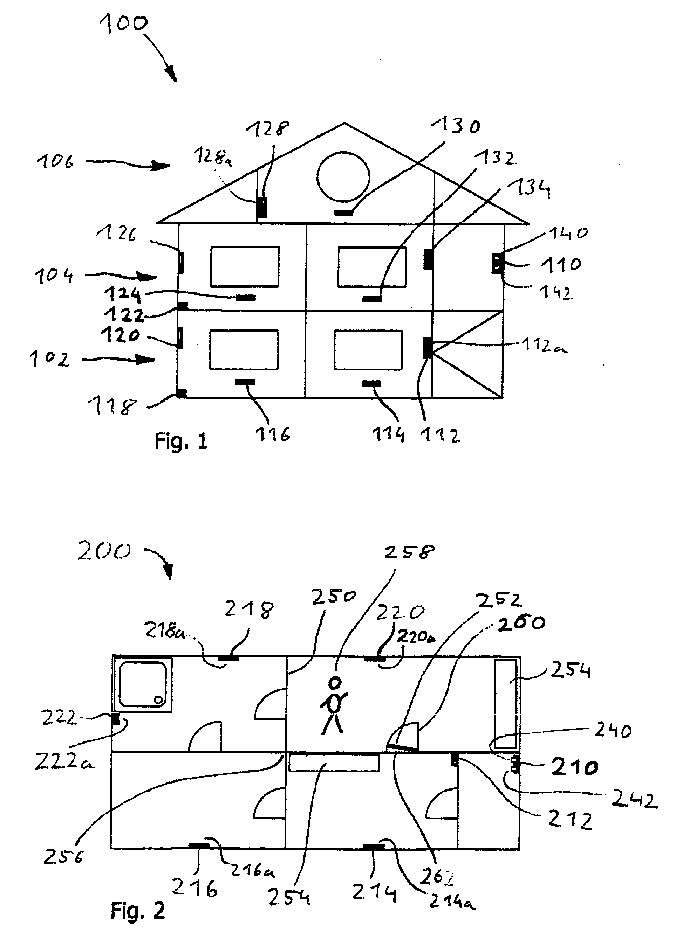

Fig. 1 zeigt ein allgemein mit 100 bezeichnetes Kommunikationssystem zur Datenübertragung. Das in einer Liegenschaft installierte Kommunikationssystem 100 erstreckt sich über mehrere Wohneinheiten 102, 104 und 106. Das Kommunikationssystem 100 umfasste eine Empfangsvorrichtung 110 und eine Vielzahl an Datenerfassungseinheiten 112 bis 134. Die Datenerfassungseinheiten 114, 126, 127, 130 und 132 sind elektronische Heizkostenverteiler (die in räumlicher Zuordnung zu je einem Heizkörper eingebaut sind). Die Datenerfassungseinheiten 118 und 122 sind Wärmemengenzähler zu Erfassung einer an eine Fußbodenheizung abgegebene Wärmeenergie. Die Datenerfassungseinheiten 112 und 134 sind elektronische Stromzähler zur integralen Erfassung einer elektrischen Wirkleistung. Die Datenerfassungseinheit 128 bestimmt die (zeitlich) integrierte Wärmeleistung eines Heizlüfters. Neben den vorgenannten Verbrauchszählern können auch andere Sensoren wie Temperaturfühler zur Erfassung einer Durchschnittstemperatur und Bewegungsmelder zur Erfassung einer Bewegungsaktivität in das Kommunikationssystem 100 integriert werden.

Die von den Datenerfassungseinheiten 112 bis 134 erfassten Zählerstände oder Messwerte werden allgemein als Daten bezeichnet. Die ortsfesten Datenerfassungseinheiten 112 bis 134 weisen jeweils einen Sender mit einer (exemplarisch für die Datenerfassungseinheiten 112 bzw. 128 gezeigen) Sendeantenne 112a, 128a zur Funkübertragung ihrer Daten an die ortsfeste Empfangsvorrichtung 110 auf. Zum Funkempfang weist die Empfangsvorrichtung 110 zwei Empfangsantennen 140 und 142 auf.

Jede der Datenerfassungseinheiten 112 bis 134 sendet (im Vergleich zu einem Sendezeitabstand dazwischen) sehr kurze Datentelegramme mit einer jeweiligen Sendedauer von einigen Millisekunden (typischerweise 10 ms bis 100 ms, hier etwa 50 ms) aus. Jede der Datenerfassungseinheiten 112 bis 134 sendet aktualisierte Datentelegramme im zeitlichen Abstand von Sekunden bis Stunden. Der Sendezeitabstand ist an eine Änderungsrate der zu übertragenden Daten angepasst. So können die Daten im Vergleich zu einem maximalen Sendezeitabstand sich entweder nur selten (beispielsweise ein Tagesendwert des Vortages bei einem Verbrauchszähler) ändern, so dass dieselben Daten mehrfach übertragen werden. Auch können die übertragenen Daten im Vergleich zum maximalen Sendezeitabstand nur sehr langsam veränderlich sein. Dadurch sind durch Kollisionen (d.h. gleichzeitig oder mit zeitlicher Überlappung gesendete Datentelegramme) zwischen den asynchronen Aussendungen verschiedener Datenerfassungseinheiten verloren gegangene Datentelegramme unkritisch. Auch durch Fremdstörungen (beispielsweise anderer Elektrogeräte, wie etwa einem Mixer oder einer elektrischen Säge) vereinzelt verloren gegangene Datentelegramme bleiben so für das Kommunikationssystem 100 unerheblich.

Neben den Nutzdaten umfasst jedes Datentelegramm eine der jeweiligen Datenerfassungseinheit zugeordnete Kennung, hier eine eindeutige Nummer (oder eine alphanumerische Bezeichnung). Zur Energieeinsparung und aus Kostengründen sind die Datenerfassungseinheiten 114 bis 132 nur mit einem Sender zur unidirektionalen Kommunikation mit der Empfangsvorrichtung 110 ausgebildet. Die Datenerfassungseinheiten 114 bis 132 sind batteriebetrieben. Durch die sehr kurzen und verhältnismäßig selten ausgesendeten Datentelegramme wird eine Batterielebensdauer (und damit auch wartungsfreier Betrieb) der Datenerfassungseinheiten 114 bis 132 von vielen Jahren (typischerweise 5 bis 10 Jahren) erreicht.

Die Datenerfassungseinheiten 112 und 134 sind netzbetrieben, da ihrer Funktion als Stromzähler entsprechend ein Zugang zum Stromnetz vorhanden ist. Die Datenerfassungseinheiten 112 und 134 umfassen jeweils auch einen Empfänger, der in der einfacheren Ausführung der Datenerfassungseinheit 112 dauerhaft empfangsbereit ist. In der stromsparenderen Ausführung der Datenerfassungseinheit 134 wird ein "Read-After-Write"-Verfahren eingesetzt. Das bedeutet, dass der Empfänger der Datenerfassungseinheit 134 nach einer Aussendung eines Datentelegramms für eine kurze Zeit auf eine Antwort der Empfangsvorrichtung 110 wartet. Durch die bidirektionale Kommunikation zwischen Empfangsvorrichtung 110 und Datenerfassungseinheiten 112, 134 sind Quittierungs- und Wiederholungsmechanismen implementiert zur weiteren Verbesserung von Aktualität und Übertragungszuverlässigkeit der Datentelegramme.

Um auch einen mehrjährigen Batteriebetrieb der Empfangsvorrichten 110 zu erreichen, ist diese nur zu vorherberechenbaren Sendezeitpunkten der Datentelegramme empfangsbereit. Dazu sind die Sendezeitabstände der Datentelegramme jeder Datenerfassungseinheit (für sich betrachtet) gemäß einem Schema zur Empfangszeitvorhersage bestimmbar. In einem einfachen Schema der Empfangszeitvorhersage sind die Sendezeitpunkte regelmäßig (d.h. periodisch). Um (im einfachen Schema mögliche) Dauerkollisionen zwischen den Datentelegrammen verschiedener Datenerfassungseinheiten (die auf die gemeinsame Empfangsvorrichtung 110 wirken) zu vermeiden, variieren in einem erweiterten Schema zur Empfangszeitvorhersage die Sendezeitabstände (d.h. die Sendezeitintervalle) zwischen aufeinanderfolgenden Sendezeitpunkten derselben Datenerfassungseinheit. Diese Variation der Sendezeitabstände kann einem festen zeitlichen Schema folgen. Zusätzlich kann die Variation der Sendezeitabstände für jede Datenerfassungseinheit spezifisch sein (d.h. aus Sicht der Empfangsvorrichtung 110 von der Kennung der Datenerfassungseinheit abhängen).

Die Empfangsvorrichtung 110 ist dazu ausgebildet, die (nächste Empfangszeit) für jede Datenerfassungseinheit 112 bis 134 auf Grundlage des jeweiligen letzten Sendezeitpunkts (oder mehrerer vorhergehender Sendezeitpunkte) zu bestimmen. Für Einzelheiten der Empfangszeitvorhersage wird auf die Druckschrift DE 102 38 692 A1 verwiesen. Für einen zuverlässigen Empfang der Datentelegramme ist die Empfangsvorrichtung 110 während eines die vorhergesagte Empfangszeit überdeckenden Empfangszeitfensters empfangsbereit. Eine Empfangsfensterbreite des Empfangszeitfensters berücksichtigt die Fertigungstoleranz, die Alterung und eine Temperaturabhängigkeit der Frequenz des zeitbestimmenden Uhrenquarzes für eine entsprechende Zeittoleranz bei der Empfangszeitvorhersage. Diese Toleranzen entstehen sowohl seitens der Datenerfassungseinheiten 112 bis 134 als auch seitens der Empfangsvorrichtung 110, wo jeweils ein Uhrenquarz mit 32 kHz eingesetzt ist. Zur Bestimmung der (auch Variablen) Empfangsfensterbreite wird auf die Druckschrift DE 199 05 316 A1 verwiesen.

Die Datenerfassungseinheit 110 ist im in Fig. 1 gezeigten Kommunikationssystem 100 in einem Treppenhausbereich angeordnet. Die Empfangsvorrichtung 110 sammelt die mittels der Datentelegramme übertragenen Daten und ordnet diese anhand der Kennung den jeweiligen Datenerfassungseinheiten 112 bis 134 zu. Die Empfangsvorrichtung 110 speichert die empfangenen Daten in Zuordnung zu den Datenerfassungseinheiten 112 bis 134. In einer einfachen Variante der Empfangsvorrichtung 110 sind die gespeicherten Daten (zu einem Stichtag) an einem Display der Empfangsvorrichtung 110 ablesbar. Eine erweiterte Variante der Empfangsvorrichtung 110 ist dazu ausgebildet, die gespeicherten Daten (zusätzlich) per Funk (im ISM-Band), Mobilfunk oder über einer Schnittstelle zu portablen Datensammelgeräten an eine zentrale Auswerte- oder Abrechnungsstelle weiterzuleiten.

Fig. 2 zeigt schematisch weitere Details, die ein Kommunikationssystem 200 beeinflussen. Das Kommunikationssystem 200 kann insbesondere ein Teilsystem des umfassenderen in Fig. 1 gezeigten Kommunikationssystems 100 sein. Das Kommunikationssystem 200 umfasst Datenerfassungseinheiten 214 bis 222, die den Datenerfassungseinheiten 114 bis 122 entsprechen. Eine Empfangsvorrichtung 210 des Kommunikationssystems 200 umfasst zwei Empfangsantennen 240 und 242. Die Empfangsvorrichtung 210 kann der Empfangsvorrichtung 110 entsprechen. Im in Fig. 2 gezeigten Ausführungsbeispiel der Empfangsvorrichtung 210 sind, abweichend zum Ausführungsbeispiel der Empfangsvorrichtung 110, die Empfangsantennen 240, 242 außerhalb eines Gehäuses der Empfangsvorrichtung 210 angeordnet.

Die Ausbreitung der von den Datenerfassungseinheiten 214 bis 222 ausgesendeten Datentelegramme unterliegt Dämpfungen, Reflexionen und Interferenzen infolge einer Ausbreitung entlang verschiedener Ausbreitungswege. Diese Effekte beeinflussen die Datenkommunikation innerhalb des Kommunikationssystems 200 und wirken mitunter störend. Diese Effekte sind insbesondere durch Raumwände 250, Türen 252 und Einrichtungsgegenstände 254 bestimmt. Bei stationären Datenerfassungseinheiten 214 bis 222 ist eine zum Empfang des Datentelegramms zur Verfügung stehende Empfangsfeldstärke eine stationäre Verteilung im Raum, soweit die Randbedingungen 250, 252 und 254 der elektromagnetischen Ausbreitung ebenfalls stationär (zeitlich unveränderlich) sind. Die resultierende Empfangsfeldstärke ist entsprechend einer Wellenlänge des Datentelegramms durch eine Vielzahl verschiedener Interferenzmaxima und verschiedener Interferenzauslöschungspunkte geprägt. Interferenzauslöschungspunkte sind (als Minima einer stehenden elektromagnetischen Welle) typischerweise um eine halbe Wellenlänge zueinander beabstandet, so dass dazwischen liegende Interferenzmaxima von den Interferenzauslöschungspunkten einen typischen Abstand von λ/4 aufweisen. Bei der bevorzugt verwendeten Funkfrequenz von 868 MHz beträgt die Wellenlänge ca. λ≈35 cm. Interferenzmaxima und Interferenzauslöschung sind somit nur wenige Zentimeter (hier etwa 8 bis 10 cm) voneinander entfernt. Fällt eine Empfangsantenne 240, 242 mit einem Interferenzauslöschungspunkt im Wesentlichen zusammen ist es dauerhaft unmöglich, Datenpakete der entsprechenden Datenerfassungseinheit zu empfangen. Entsprechend der verschiedenen Aussendungsorte (genauer: Positionen der Sendeantennen 214a bis 222a) sind die Verteilungen der Empfangsfeldstärke für jede Datenerfassungseinheit 214 bis 222 im Allgemeinen verschieden. Aufgrund der Vielzahl an Datenerfassungseinheiten 214 bis 222 ist es weder praktikabel noch überhaupt möglich, eine optimale Montageposition der Empfangsvorrichtung 210 (genauer: der Empfangsantennen 240, 242) bei einer Montage und Inbetriebnahme der Empfangsvorrichtung 210 (experimentell) zu bestimmen. Zwar ist bei einer sogenannten "Walk-in"-Ablesung mit einer mobilen Empfangsvorrichtung (nicht gezeigt) das Problem der Interferenzauslöschung insofern nicht vorhanden, als durch Geh- oder Fahrbewegung die verhältnismäßig scharf lokalisierten Interferenzauslöschungspunkte schnell durchquert werden. So kann eine (subjektiv) als erreichbar wahgenommene Reichweite bei mobilem Funkempfang (mittels einer mobilen Empfangsvorrichtung) höher erscheinen als beim Empfang mit der stationären Empfangsvorrichtung 210 (für den Funkempfang von allen Datenerfassungseinheiten 214 bis 222). Allerdings sich muss eine solche "Walk-in"-Ablesung über den maximalen Sendezeitabstand erstrecken, um einen Empfang mindestens eines Datentelegramms von jeder Datenerfassungseinheit 214 bis 220 sicherzustellen. Bei maximalen Sendezeitabständen in der Größenordnung von mehreren Stunden kann so die "Walk-in"-Ablesung als unpraktikabel ausscheiden. Zudem kann die Empfangsvorrichtung 210 (alternativ zum gezeigten Datenkommunikationssystem 200) an einem (funktechnisch vorteilhaften) zentralen Punkt 256 innerhalb der Wohnung installiert sein, während eine "Walk-in"-Ablesung innerhalb der Wohnung mit dem Aufwand einer individuellen Terminvereinbarung und gegebenenfalls Störung eines Bewohners verbunden ist.

Zudem ist auch bei ausschließlich stationären Datenerfassungseinheiten 214 bis 222 die räumliche Verteilung der Interferenzmaxima und Interferenzauslöschungspunkte veränderlich durch sich bewegenden Personen 258 oder durch zwischen einer Offenstellung 260 und einer Schließstellung 262 schwenkbeweglichen Türen 252. Zudem können die großflächigen Einrichtungsgegenstände 254 hinzugefügt, entfernt oder umpositioniert (wobei schon eine Verschiebung um wenige Zentimeter relevant sein kann) werden. So kann ein (bezüglich einer bestimmten Datenerfassungseinheit 214 bis 222) zuverlässiger Empfangsort der Empfangsvorrichtung 210 einer zeitlichen Veränderung unterliegen.

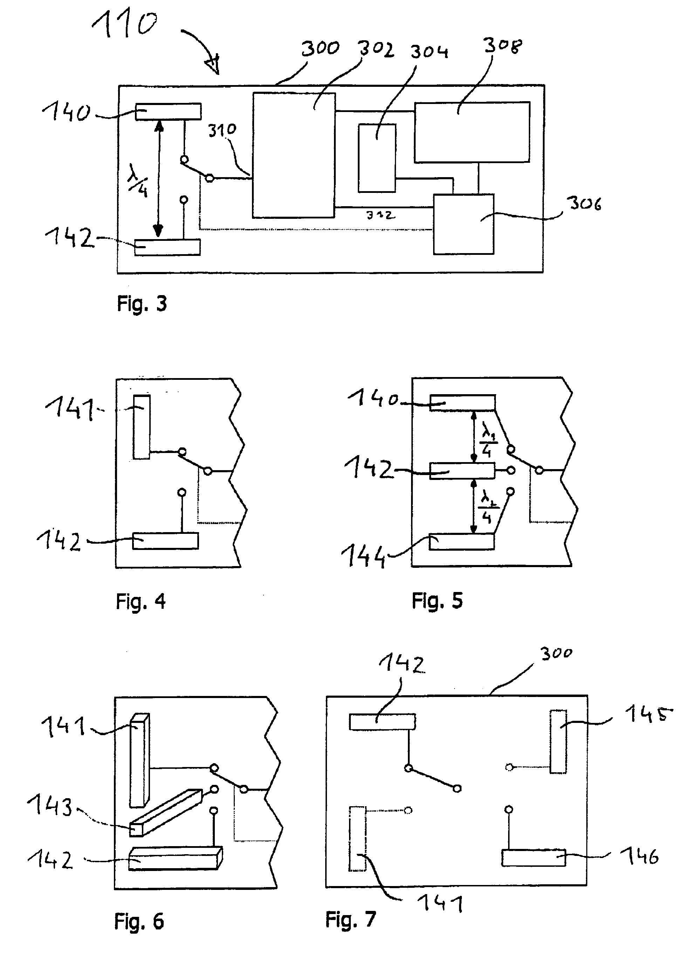

Fig. 3 zeigt das erste Ausführungsbeispiel der Empfangsvorrichtung 110 mit den zwei parallel und zueinander beabstandet angeordneten Empfangsantennen 140 und 142. Die Empfangsantennen 140 und 142 sind im Gehäuse 300 der Empfangsvorrichtung 110 untergebracht. Alternativ können die Empfangsantennen 140, 142 Teil des Gehäuses 300 sein, oder es können (wie in Fig. 2 gezeigt) außerhalb des Gehäuses 300 angeordnete Empfangsantennen 240, 242 eingesetzt werden.

Die Empfangsvorrichtung 110 umfasst ferner einen Überlagerungsempfänger 302, einen mit einem Speicher 304 verbundenen Prozessor 306 und eine Stromquelle 308, die den Prozessor 306 und den Überlagerungsempfänger 302 mit einer Betriebsspannung versorgt.

Ein Querabstand zwischen den Empfangsantennen 140 und 142 ist in Abhängigkeit von der Wellenlänge λ der Datentelegramme bestimmt. Im in Fig. 3 gezeigten Ausführungsbeispiel der Empfangsvorrichtung 110 beträgt der Antennenabstand (genauer: der Abstand der Antennenmitten) λ/4. So kann sichergestellt werden, dass eine nicht verschwindende Empfangsfeldstärke für die Datentelegramme aller (und nicht nur fast aller) Datenerfassungseinheiten 214 bis 222 an zumindest einer der beiden Empfangsantennen 140 und 142 (zur Empfangszeit) vorliegt. Ein Empfang von allen Datenerfassungseinheiten ist insbesondere deshalb wichtig, da andernfalls für auch nur eine einzige nicht empfangene Datenerfassungseinheit doch wieder eine aufwendige Ablesebegehung notwendig wäre. Die Bedeutung, von allen Datenerfassungseinheiten 214 bis 222 Datentelegramme zu empfangen, ist (wie vorstehend beschrieben) vom Empfang aller Datentelegramme einer Datenerfassungseinheit zu unterscheiden. Letzteres ist für eine zuverlässige Funktion des Datenkommunikationssystems 100 oder 200 nicht (zwingend) erforderlich.

Die Empfangsvorrichtung 110 ist dazu ausgebildet, für jede (der Empfangsvorrichtung 110 zugeordnete) Datenerfassungseinheit zusammen mit deren nächster Empfangszeit (d.h. dem Empfangszeitfenster des nächsten Datentelegramms dieser Datenerfassungseinheit) eine Präferenzempfangsantenne im Speicher 302 zu hinterlegen. Die Präferenzempfangsantenne einer Datenerfassungseinheit ist eine für die Datenerfassungseinheit als optimal gefundene Empfangsantenne bei einer (nachstehend beschriebenen) Initialisierung bei einer Funkinbetriebnahme der Empfangsvorrichtung 110 oder die bei der letzten Empfangszeit (d.h. beim letzten Empfangsversuch) dieser Datenerfassungseinheit zu einem fehlerfreien Empfang (des letzten Datentelegramms) geführt hat. Entsprechend bewirkt der Prozessor 306, dass zur nächsten Empfangszeit die gemäß dem Speicher 304 der als nächstes zu empfangenden Datenerfassungseinheit zugeordnete Präferenzempfangsantenne 140 oder 142 mit einem Eingang 310 des Überlagerungsempfängers 302 beaufschlagt wird. Vom Überlagerungsempfänger 302 gegebenenfalls empfangene Rohdaten werden vom Prozessor 306 über eine Datenleitung 312 erhalten und auf Fehler analysiert. Soweit ein fehlerfreier Datenempfang vorliegt, werden die empfangenen Daten vom Prozessor 306 formatiert und als aktuelle Daten (d.h. Messwerte oder Zählerstand) im Speicher 304 abgelegt. Nur wenn von einer Datenerfassungseinheit (der Datenerfassungseinheiten 112 bis 134 oder 214 bis 222) in dem für die entsprechende Datenerfassungseinheit vorhergesagten Empfangszeitfenster mehrmals (hier: vierfach) kein fehlerfreies (d.h. ungestörtes und gültiges) Datentelegramm eintrifft, wird vermutet, dass sich die Funkinterferenz geändert hat. Im Fall eines mehrfach nicht fehlerfreien Empfangs wird im nächsten Empfangszeitfenster eine andere Empfangsantenne (als Präferenzempfangsantenne) gewählt. Die (neu) gewählte Präferenzempfangsantenne wird für zukünftige Empfangszeitfenster der jeweiligen Datenerfassungseinheit gespeichert. So ist erreichbar, dass aufgrund einer im Verhältnis zur Häufigkeit der Empfangszeitpunkte seltenen Veränderung der Funkinterferenz, für jede Datenerfassungseinheit, die wahrscheinlich optimale Empfangsantenne 140 oder 142 (als Präferenzempfangsantenne) oder zumindest eine wahrscheinlich interferenzauslöschungsfreie Empfangsantenne 140 oder 142 (als Präferenzempfangsantenne) für das nächste Empfangszeitfenster mit hoher Vorhersagewahrscheinlichkeit (d.h. mit hoher "Trefferrate") vom Prozessor 306 vorhergesagt wird. Insbesondere kann so vermieden werden, dass jeder Empfangsversuch mit allen Empfangsantennen 140 und 142 (hintereinander) wiederholt werden muss.

Die Fign. 4 bis 8 zeigen Abschnitte (für weitere Varianten) der Empfangsvorrichtung 110 (und analog für die Empfangsvorrichtung 210). In der Variante der Fig. 4 ist die parallele Empfangsantenne 140 durch eine zur Empfangsantenne 142 senkrecht ausgerichtete Empfangsantenne 141 ersetzt. So kann, neben der ortsabhängigen Interferenzauslöschung, auch einer veränderlichen Polarisation (d.h. Schwingungsebene der elektrischen Feldkomponente) Rechnung getragen werden.

Die in Fig. 5 gezeigte Variante der Empfangsvorrichtung 110 umfasst drei Empfangsantennen 140, 142 und 144. Die drei Empfangsantennen werden entsprechend der im Speicher 304 in Zuordnung zu jeder der Datenerfassungseinheiten abgelegten Präferenzempfangsantenne zur Empfangszeit mit dem Eingang 310 des Überlagerungsempfängers 302 verbunden. Ein Nächster-Nachbar-Abstand zwischen den jeweils zueinander parallelen Empfangsantennen 140, 142, 144 beträgt $\lambda/4$. Im Falle einer Aussendung der Datentelegramme mit verschiedenen Trägerfrequenzen $f_1$ und $f_2$ (beispielsweise in Zuordnung zu den verschiedenen Datenerfassungseinheiten), beträgt der Nächster-Nachbar-Abstand der Empfangsantennen 140, 142, 144 entsprechend $\lambda_1/4$ zwischen den Empfangsantennen 140 und 142 und $\lambda_2/4$ zwischen den Empfangsantennen 142 und 144. In entsprechender Weise können auch mehr als drei Empfangsantennen eingesetzt werden. Ferner kann ein Nächster-Nachbar-Abstand der Empfangsantenne 140, 142, 144 mit einer Abweichung $\Delta\lambda/4$ gewählt werden. Durch einen einheitlichen (aber von $\lambda/4$ abweichenden) Nächster-Nachbar-Abstand $(\lambda+\Delta\lambda)/4$ kann entsprechend einer Anzahl an Empfangsantennen, N, ein Wellenlängenspektrum im Bereich von $\lambda-N\cdot\Delta\lambda$ bis $\lambda+N\cdot\Delta\lambda$ abgedeckt werden. Hierbei ist die Abweichung $\Delta\lambda$ kleiner als $\lambda/10$, vorzugsweise $\Delta\lambda = \lambda/20$.

Fig. 6 zeigt eine weitere Variante der Empfangsvorrichtung 110, bei der drei Empfangsantennen 141, 142, 143 in allen drei Raumrichtungen (paarweise zueinander senkrecht) angeordnet sind. So kann der Funkempfang bei verschiedenen Frequenzen oder in einem Wellenlängenspektrum (entsprechend Fig. 5) mit dem Funkempfang unter verschiedenen oder veränderlichen Polarisationen verbunden werden.

Fig. 7 zeigt zwei weitere Varianten der Empfangsvorrichtung 110. In einer einfachen Variante der Empfangsvorrichtung 110 sind zwei (zueinander parallele) Empfangsantennen 142 und 146 an (diagonal) gegenüberliegenden Positionen im Gehäuse 300 der Empfangsvorrichtung 110 angeordnet. So wird erreicht, dass eine durch die Wellenlänge $\lambda$ der Datenkommunikation (des Datenkommunikationssystems 100) vorgegebene Ausdehnung mit einer kompakten Bauweise der Empfangsvorrichtung 110 vereinbar ist. In einer (gestrichelt gezeichneten) erweiterten Variante sind vier Empfangsantennen 141, 142, 145 und 146 in jeweils verschiedenen Eckpunkten des Gehäuses 300 angeordnet. So kann einem Empfang der Datentelegramme aus unterschiedlichen Einstrahlrichtungen (durch die Aktivierung der gespeicherten Präferenzempfangsantenne) Rechnung getragen werden. Ferner ist das Gehäuse 300 zumindest an den mit einer der Empfangsantennen 141, 142, 145, 146 hinterlegten Stelle mit einem für elektromagnetische Strahlung der Wellenlänge $\lambda$ durchlässigen Fenster versehen.

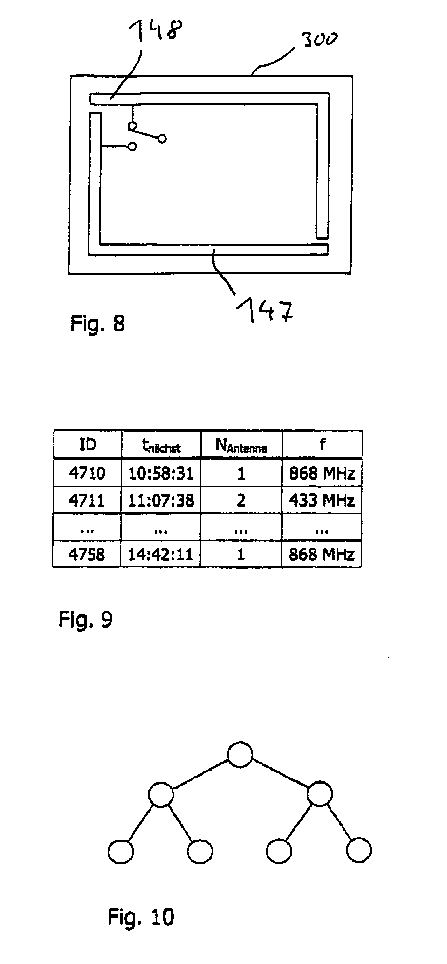

Fig. 8 zeigt eine weitere Variante der Empfangsvorrichtung 110 mit zwei am Gehäuse 300 umlaufenden Empfangsantennen 147 und 148. So ist eine besonders isotrope Empfangsempfindlichkeit der Empfangsvorrichtung 110 erreichbar.

Fig. 9 zeigt schematisch eine Formatierung eines Speicherinhalts im Speicher 304. In einer tabellarischen Darstellung des Speicherinhalts ist jede Datenerfassungseinheit 112 bis 134 oder 214 bis 222 mit einer Kennung, ID, eindeutig hinterlegt. In Zuordnung zur Kennung, ID, der jeweiligen Datenerfassungseinheit ist deren vorhergesagte nächste Empfangszeit, $t_{nächst}$, (oder deren nächstes Empfangszeitfenster von $t_{Anfang}$ bis $t_{Ende}$) gespeichert. Soweit ausschließlich die erwartete nächste Empfangszeit $t_{nächst}$ im Speicher 304 gespeichert ist, kann eine Anfangszeit $t_{Anfang}$ und eine Endzeit $t_{Ende}$ eines Empfangszeitfensters durch eine voreingestellte Empfangszeitfensterbreite $\Delta t$ abgeleitet werden. Beispielsweise ist $t_{Anfang} = t_{nächst} - \Delta t/2$ und $t_{Ende} = t_{nächst} + \Delta t/2$.

In Zuordnung zu jeder der Kennungen, ID, oder der nächsten Empfangszeit, $t_{nächst}$, ist ein Index $N_{Antenne}$

gespeichert. Der Antennenindex $N_{Antenne}$ = 1, ..., N individualisiert die Empfangsantennen 140, 142; 141, 142; 140, 142, 144; 141, 142, 143; 142, 146; 141, 142, 145, 146; und 147, 148 eindeutig.

Auch sind im Speicher 304 weitere Funkparameter der Datenkommunikation im Kommunikationssystem 100, wie Sendefrequenz f, Modulationsart und Modulationsparameter oder Bitcodierungsart der Datenerfassungseinheiten jeweils individuell für jede der Datenerfassungseinheiten gespeichert. Der Überlagerungsempfänger 302 wird (durch die Datenverbindung 312) vom Prozessor 306 auf den jeweiligen (endgerätespezifischen) Funkparameter für die Dauer des jeweiligen Empfangszeitfensters eingestellt. So können Frequenzbereiche zur Datenkommunikation effektiv genutzt, Kollisionen der Datentelegramme vermieden, oder technisch unterschiedliche Systeme der Datenerfassungseinheiten mit der einen Empfangsvorrichtung 110 zusammengeführt werden.

Fig. 10 zeigt eine logische Verknüpfung im Speicher 304. Die in Zuordnung zu jeder Datenerfassungseinheit abgelegten Betriebsdaten des Überlagerungsempfängers 302 (wie die vorstehend unter Bezug auf Fig. 9 beschriebene nächste Empfangszeit, $t_{nächst}$, der Antennenindex, $N_{Antenne}$, und die Funkparameter wie die Frequenz, f) sind in einem binären Baum strukturiert. Jeder (mit einem Kreis in Fig. 10 symbolisierten) Knoten der Datenstruktur entspricht einer der Datenerfassungseinheiten. Die Baumstruktur ist gemäß der nächsten Empfangszeit, $t_{nächt}$, geordnet. D.h. die einem Knoten entsprechende nächste Empfangszeit ist größer als beide Empfangszeiten der (von diesem Knoten ausgehend) hierarchisch tiefer liegenden beiden Knoten. So ist unter Aufrechterhaltung der Ordnung ein schneller Zugriff auf die nächste Empfangszeit an der Spitze (oder "Wurzel") des binären Baums ermöglicht.

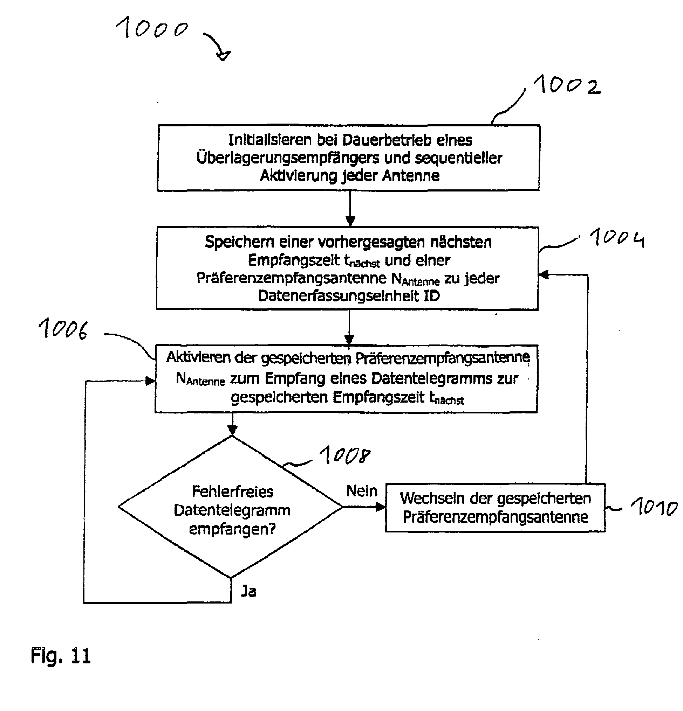

Fig. 11 zeigt ein Verfahren zum Funkempfang mittels jeder der vorstehend beschriebenen Datenerfassungseinheiten 110 oder 210. Bei einer erstmaligen Inbetriebnahme der Empfangsvorrichtung 110 oder 210 (beispielsweise beim Einbau der Empfangsvorrichtung) oder bei einer Installation eines weiteren oder mehrerer weiterer Datenerfassungseinheiten wird eine Initialisierung der Empfangsvorrichtung 110 oder 210 durchgeführt. Bei der Initialisierung werden alle Empfangsantennen $N_{Antenne}$ = 1, ..., N sequentiell (d.h. eine Empfangsantenne nach der anderen während eines maximalen Sendezeitabstands bezogen auf eine der Datenerfassungseinheiten) mit dem Überlagerungsempfänger 302 verbunden und der Überlagerungsempfänger 302 durchgehend betrieben. Wird während des maximalen Sendezeitabstands ein Datentelegramm fehlerfrei empfangen, wird dieses auf Grundlage der im Datentelegramm enthaltenen Kennung, ID, der aussendenden Datenerfassungseinheit zugeordnet. Die beim fehlerfreien Empfang aktivierte Empfangsantenne wird als Präferenzempfangsantenne im Speicher 304 abgelegt. Nach Abschluss der Initialisierung kann so sichergestellt werden (durch Auslesen oder Anzeigen des Inhalts des Speichers 304), dass Datentelegramme von allen Datenerfassungseinheiten mittels wenigstens einer Empfangsantenne empfangen werden können. Ferner kann aus dem Empfangszeitpunkt wenigstens eines fehlerfrei empfangenen Datentelegramms oder aus dem Zeitabstand mehrerer erfolgreich empfangener Datentelegramme einer Datenerfassungseinheit die nächste Empfangszeit dieser Datenerfassungseinheit durch den Prozessor 306 vorhergesagt werden und im Speicher 304 in Zuordnung zu dieser Datenerfassungseinheit abgelegt werden. So kann durch die Initialisierung 1002 (bei der Funkinbetriebnahme der Empfangsvorrichtung 110 oder 210, oder bei der Funkinbetriebnahme der Empfangsvorrichtung 110 oder 210 noch "unbekannten" Datenerfassungseinheiten), ein vollständiger Betriebsdatensatz im Speicher 304 erstellt werden. Der Betriebsdatensatz stellt damit sicher, dass zumindest zum Zeitpunkt der Initialisierung alle Datenerfassungseinheiten empfangen werden können.

Nachdem die vorhergesagte nächste Empfangszeit, $t_{nächt}$, und die zu jeder Datenerfassungseinheit mit Kennung ID zugeordneten Präferenzempfangsantenne, $N_{Antenne}$, im Speicher 304 in einem Schritt 1004 (beispielsweise im Zuge der Initialisierung 1002) gespeichert wurden, aktiviert der Prozessor 306 im Schritt 1006 zur gespeicherten Empfangszeit $t_{nächst}$ die gespeicherte Präferenzempfangsantenne $N_{Antenne}$ zum Empfang des nächsten Datentelegramms.

Soweit eine Analyse 1008 durch den Prozessor 306 ein fehlerfreies Datentelegramm ergibt, wird dessen Inhalt im Speicher 304 als aktuelle Nutzdaten der zugeordneten Datenerfassungseinheit gespeichert. Der Überlagerungsempfänger 302 wird durch den Prozessor 306 für eine verbleibende Zeitspanne bis zum nächsten Empfangszeitpunkt (derselben oder einer anderen Datenerfassungseinheit) abgeschaltet. Zur nächsten Empfangszeit wird dann wiederum gemäß Schritt 1006 die gespeicherte Empfangsantenne $N_{Antenne}$ aktiviert, d.h. der Überlagerungsempfänger wird (ggf. gemäß im Speicher 304 in Zuordnung zur entsprechenden Datenerfassungseinheit gespeicherter Funkparameter) in Betrieb genommen und eingangsseitig mit der als Präferenzempfangsantenne gespeicherten Empfangsantenne mit Antennenindex $N_{Antenne}$ verbunden. Ergibt die Analyse 1008 dagegen (wiederholt) ein fehlerhaftes Datentelegramm, wird (für die nächste Empfangszeit derselben Datenerfassungseinheit) zu einer anderen Empfangsantenne als zukünftige Präferenzempfangsantenne gewechselt. D.h. es wird im Zuge des Schritts 1004 die nächste Empfangszeit, $t_{nächst}$, der entsprechenden Datenerfassungseinheit im Speicher 304 und der (gewechselten) Präferenzempfangsantenne mit Antennenindex $N_{Antenne}$ in Zuordnung zur entsprechenden Datenerfassungseinheit mit Kennung ID gespeichert. Diese (gewechselte) Präferenzempfangsantenne, $N_{Antenne}$, wird zur gespeicherten Empfangszeit wiederum entsprechend dem Schritt 1006 aktiviert.

Die Initialisierung 1002 erfasst beim Dauerbetrieb des Überlagerungsempfängers 302 während des maximalen Sendezeitabstands mit einer der sequentiell aktivierten Empfangsantennen auch eine Empfangsfeldstärke. Die erfasste Empfangsfeldstärke wird in Zuordnung zur aktivierten Empfangsantenne zwischengespeichert. Nach sequentieller Aktivierung aller Empfangsantennen (jeweils während des maximalen Sendezeitabstands) wird bei fehlerfreiem Empfang der Datentelegramme derselben Datenerfassungseinheit mittels mehreren Empfangsantennen jene Empfangsantenne im Speicher 304 als Präferenzempfangsantenne gespeichert, für welche die höchste Empfangsfeldstärke zwischengespeichert ist.

Zudem kann durch einen (auch als "Header" bezeichneten) längeren Datenkopf am Anfang des Datentelegramms eine Empfangsfeldstärke auch innerhalb eines Empfangszeitfensters für mehrere oder alle Empfangsantennen gemessen werden. So kann noch vor Beginn der Nutzdaten im Datentelegramm eine Bestimmung oder Auswahl der Präferenzempfangsantenne getroffen werden. Dies kann eine Initialisierung 1002 der Empfangsvorrichtung 110 oder 210 beschleunigen, indem die Initialisierung innerhalb eines (einzigen) maximalen Sendezeitabstands vollständig durchführbar ist. So kann der Strombedarf der Empfangsvorrichtung 110 oder 210 auch im Schritt der Initialisierung 1002 weiter reduziert werden. Die Bestimmung der Präferenzempfangsantenne während der Aussendung des Datenkopfes der Datentelegramme kann insbesondere bei (für die Funkzählerfernauslesung) entsprechend genormten Typen des Datentelegramms, beispielsweise gemäß der europäischen Norm EN 13757-4, erfolgen. Ein standardisiertes Verfahren der Empfangszeitvorhersage kann zudem den maximalen Sendezeitabstand (d.h. die maximale Sendepause je Datenerfassungseinheit) festlegen, die andernfalls mehrfach unter Dauerbetrieb des Überlagerungsempfängers 302 für jede Empfangsantenne durchlaufen wird.

In einer Weiterbildung umfasst das Datenkommunikationssystem 100 mehrere Empfangsvorrichtungen 110 und/oder 210. So ist eine Vergrößerung der Anzahl an (von den Empfangsvorrichtungen) empfangenen Datenerfassungseinheiten erreichbar. Ferner kann die Wahrscheinlichkeit, dass eine vorgesehene Datenerfassungseinheit nicht von einer der Empfangsvorrichtungen empfangen werden, noch weiter reduziert werden. Ferner kann das weitergebildete Datenkommunikationssystem hierarchisch aufgebaut sein. D.h. die mehreren Empfangsvorrichtung 110 und/oder 210 sind zugleich "Datenerfassungseinheiten" bezüglich einer übergeordneten "Empfangsvorrichtung". Dieser hierarchische Aufbau kann sich über mehrere Hierarchieebenen fortsetzen.

Durch die wechselseitige Nutzung einer der Empfangsantennen halbiert sich bei der Empfangsvorrichtung 110 oder 210 ein Strombedarf gegenüber einer Empfangsvorrichtung mit zwei oder mehr kompletten Empfängersystemen mit entsprechender Funk- und Datentechnik in Zuordnung zu jeder der Empfangsantennen. Dies ist erreichbar, indem nur ein gemeinsames funk- und datentechnisches System 302, 304, 306 in der Empfangsvorrichtung 110 oder 210 vorgesehen ist. Zum Vorteil des Strombedarfs und der Empfangszeit wird nur die gespeicherte Präferenzempfangsantenne (als zuverlässig vorhergesagte Empfangsantenne für einen fehlerfreien Empfang des Datentelegramms) aktiviert. So müssen nicht sequentiell mehrere oder alle Empfangsantennen aktiviert werden. Dieser Vorteil trifft insbesondere gegenüber herkömmlichen Techniken zu, wie beispielsweise WLAN-Systemen, die beim Aufbau einer funktechnischen Verbindung zwischen zwei Kommunikationspartnern zunächst durch sequentiellen Vergleich von Empfangsfeldstärken an zwei oder mehr Empfangsantennen eine optimale Kommunikationsantenne auswählen und für die folgende Kommunikation nutzen. Insbesondere sind solche bekannten Systeme bidirektional, so dass beim Verbindungsaufbau im Rahmen eines Aufbaudialogs auch die Entscheidung für die Nutzung einer bestimmten Empfangsantenne für die nachfolgende Nutzkommunikation zwischen den beiden funktechnischen Kommunikationspartnern getroffen werden kann. Da die üblichen Verbindungsdauern solcher bekannten Techniken mehr im Sekunden- bis Stundenbereich als im Bereich von Millisekunden liegen (wie im Fall der Datenkommunikationssysteme 100 oder 200), ist die lange Dauer einer solchen konventionellen Antennenwahlphase unbedeutend. Natürlich müssen aber bei solchen konventionellen Kommunikationssystemen beide Kommunikationspartner netzbetrieben oder (wie etwa bei sogenannten "Smartphones") durch eine Kurzlebensdauerbatterie (wie ein nach wenigen Tagen wieder aufzuladender Akkumulator) betrieben. Diese erheblich eingeschränkte Betriebszeit kann durch die vorgenannten Empfangsvorrichtungen 110 und 210 und Verfahren um Größenordnungen übertroffen werden.

**Patentansprüche**

1. Verfahren (1000) zum Funkempfang von einer Vielzahl Datenerfassungseinheiten (112, 114, 116, 118, 120, 122, 124, 126, 128, 130, 132, 134; 212, 214, 216, 218, 220, 222) an eine Empfangsvorrichtung (110; 210) gesendeter Datentelegramme einer Datenkommunikation mit Empfangszeitvorhersage, wobei die Empfangsvorrichtung zwei oder mehr Empfangsantennen (140, 142; 141, 142; 140, 142, 144; 141, 142, 143; 142, 146; 141, 145; 141, 142, 145, 146; 147, 148; 240, 242) aufweist und die Schritte ausführt:

   - Speichern (1004), in Zuordnung zu jeder Datenerfassungseinheit der Vielzahl Datenerfassungseinheiten,

a) einer vorhergesagten nächsten Empfangszeit ($t_{nächst}$) und

b) einer Präferenzempfangsantenne ($N_{Antenne}$) von den zwei oder mehr Empfangsantennen,

- Aktivieren (1006), zur gespeicherten Empfangszeit, der gespeicherten Präferenzempfangsantenne zum Empfang eines Datentelegramms, und

- Wechseln (1010) der gespeicherten Präferenzempfangsantenne, falls kein fehlerfreies Datentelegramm empfangen wurde.

2. Verfahren nach Anspruch 1, wobei die Datenkommunikation von den Datenerfassungseinheiten zur Empfangsvorrichtung unidirektional ist.

3. Verfahren nach Anspruch 1 oder 2, wobei die Empfangsvorrichtung einen einzigen Überlagerungsempfänger (302) aufweist.

4. Verfahren nach Anspruch 3, wobei der Überlagerungsempfänger durch einen Strompuls, dessen Pulsdauer im Wesentlichen die Empfangszeit umfasst, betrieben wird.

5. Verfahren nach einem der vorhergehenden Ansprüche, wobei die Empfangsvorrichtung netzunabhängig betrieben wird, vorzugsweise mit einer Standzeit von mehr als 5 Jahren.

6. Verfahren nach einem der vorhergehenden Ansprüche, wobei beim Wechseln die gespeicherte Präferenzempfangsantenne unter den zwei oder mehr Empfangsantennen umlaufend oder zufällig wechselt.

7. Verfahren nach einem der vorhergehenden Ansprüche, wobei die gespeicherte Präferenzempfangsantenne gewechselt wird, falls mehrfach, vorzugsweise zweifach, kein fehlerfreies Datentelegramm empfangen wurde.

8. Verfahren nach einem der vorhergehenden Ansprüche, wobei kein fehlerfreies Datentelegramm empfangen wurde, falls kein Datentelegramm empfangen wurde, eine Redundanzprüfung des Datentelegramms einen Fehler ergibt, oder Nutzdaten des Datentelegramms eine Formatbedingung nicht erfüllen.

9. Verfahren nach einem der vorhergehenden Ansprüche, wobei die Empfangszeit durch ein Zeitfenster bestimmt wird.

10. Verfahren nach einem der vorhergehenden Ansprüche, wobei die Datenerfassungseinheiten einen Verbrauchszähler und/oder einen oder mehrere Sensoren umfassen, und wobei die Datentelegramme einen Verbrauchszählerstand und/oder einen oder mehrere Messwerte repräsentieren.

11. Verfahren nach einem der vorhergehenden Ansprüche, wobei die zwei oder mehr Empfangsantennen zueinander im Wesentlichen parallel angeordnet sind.

12. Verfahren nach einem der Ansprüche 1 bis 10, wobei die zwei oder mehr Empfangsantennen zueinander im Wesentlichen senkrecht angeordnet sind.

13. Verfahren nach einem der vorhergehenden Ansprüche, wobei die Datentelegramme mit einer Wellenlänge λ empfangen werden und eine oder alle der zwei oder mehr Empfangsantennen einen Nächster-Nachbar-Abstand im Bereich von λ/8 bis λ, vorzugsweise von zumindest im Wesentlichen λ/4, aufweisen.

14. Verfahren nach einem der vorhergehenden Ansprüche, wobei das Speichern Teil einer Initialisierung (1002) oder eines vorhergehenden Schritts des Wechselns (1010) ist.

15. Verfahren nach Anspruch 14, wobei die Initialisierung eine sequentielle Daueraktivierung jeder Empfangsantenne umfasst.

16. Verfahren nach Anspruch 15, wobei beim Empfang eines fehlerfreien Datentelegramms eine Empfangsfeldstärke der jeweils aktiven Empfangsantenne erfasst wird und die Empfangsantenne mit der höchsten Empfangsfeldstärke in Zuordnung zur jeweiligen Datenerfassungseinheit als Präferenzempfangsantenne gespeichert wird.

17. Verfahren nach einem der vorhergehenden Ansprüche, wobei aufeinanderfolgende Datentelegramme einer der Datenerfassungseinheiten nur geringfügig geänderte Werte repräsentieren oder eine Datenerfassungseinheiten identische Datentelegramme mehrfach sendet.

18. Empfangsvorrichtung (110; 210) zum Funkempfang von einer Vielzahl Datenerfassungseinheiten (112, 114, 116, 118, 120, 122, 124, 126, 128, 130, 132, 134; 212, 214, 216, 218, 220, 222) an die Empfangsvorrichtung gesendeter Datentelegramme einer Datenkommunikation mit Empfangszeitvorhersage, umfassend:

- zwei oder mehr Empfangsantennen (140, 142; 141, 142; 140, 142, 144; 141, 142, 143; 142, 146; 141, 145; 141, 142, 145, 146; 147, 148; 240, 242),

- einen Speicher (304), der dazu ausgebildet ist, in Zuordnung zu jeder Datenerfassungseinheit der Vielzahl Datenerfassungseinheiten,

a) eine vorhergesagte nächste Empfangszeit ($t_{nächst}$) und
b) eine Präferenzempfangsantenne ($N_{Antenne}$) von den zwei oder mehr Empfangsantennen
zu speichern, und

- einen Prozessor (306), der dazu ausgebildet ist, zur gespeicherten Empfangszeit die gespeicherte Präferenzempfangsantenne zum Empfang eines Datentelegramms zu aktivieren und, falls kein fehlerfreies Datentelegramm empfangen wurde, die gespeicherte Präferenzempfangsantenne zu wechseln.

19. Empfangsvorrichtung nach Anspruch 18, ferner ein Gehäuse (300) umfassend, bei dem die zwei oder mehr Empfangsantennen im Gehäuse untergebracht sind, vorzugsweise an einer Gehäuseseite oder an einer umlaufenden Gehäusewand.

Fig. 1

Fig. 2

*110*

*140*

*300  302  304  308*

*310*

$\frac{\lambda}{4}$

*142*

*312*

*306*

**Fig. 3**

*141*

*142*

**Fig. 4**

*140*

*142*

*144*

$\frac{\lambda_1}{4}$

$\frac{\lambda_1}{4}$

**Fig. 5**

*141*

*143*

*142*

**Fig. 6**

*142*

*300*

*145*

*146*

*141*

**Fig. 7**

148

300

Fig. 8

147

| ID | $t_{nächst}$ | $N_{Antenne}$ | f |
|------|----------|-----------|----------|
| 4710 | 10:58:31 | 1 | 868 MHz |
| 4711 | 11:07:38 | 2 | 433 MHz |
| ... | ... | ... | ... |
| 4758 | 14:42:11 | 1 | 868 MHz |

Fig. 9

Fig. 10

*1000*

*1002*

Initialisieren bei Dauerbetrieb eines Überlagerungsempfängers und sequentieller Aktivierung jeder Antenne

*1004*

Speichern einer vorhergesagten nächsten Empfangszeit $t_{nächst}$ und einer Präferenzempfangsantenne $N_{Antenne}$ zu jeder Datenerfassungseinheit ID

*1006*

Aktivieren der gespeicherten Präferenzempfangsantenne $N_{Antenne}$ zum Empfang eines Datentelegramms zur gespeicherten Empfangszeit $t_{nächst}$

*1008*

Fehlerfreies Datentelegramm empfangen?

Nein

*1010*

Wechseln der gespeicherten Präferenzempfangsantenne

Ja

Fig. 11

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005036250 A1
- DE 10238692 A1
- DE 19905316 A1